# EUROPÄISCHE PATENTANMELDUNG

(11) **EP 1 619 414 A2**
(43) Veröffentlichungstag der Anmeldung: **25.01.2006**
(21) Anmeldenummer: 05011558.3
(22) Anmeldetag: 28.05.2005
(51) Int. Cl.: F16H 25/20, F16H 25/24

(54) **Stelleinrichtung**

(30) Priorität: 23.07.2004 AT 12642004
(71) Anmelder: Zimmermann, Jürgen, 6900 Bregenz (AT)
(72) Erfinder: Zimmermann, Jürgen, 6900 Bregenz (AT)
(74) Vertreter: Hefel, Herbert

(57) **Zusammenfassung**

Eine Stelleinrichtung zur Positionierung einer Last umfasst eine Spindel (3) und eine auf einem Außengewinde (4) der Spindel (3) angeordnete Tragmutter (2) sowie eine Sicherheitsfangmutter (12), die ebenfalls auf dem Außengewinde (4) der Spindel (3) angeordnet ist und mit der Tragmutter (2) über eine Kupplung drehmomentübertragend aber in Richtung der Längsachse (7) der Spindel (3) verschiebbar verbunden ist, wobei im Falle eines Gewindedurchbruchs der Tragmutter (2) durch eine in Richtung einer Annäherung der Sicherheitsfangmutter (12) an die Tragmutter (2) wirkende Kraft die Verschiebung der Sicherheitsfangmutter (12) in Richtung zur Tragmutter (2) durch eine erste Anschlagfläche (18) für die Sicherheitsfangmutter (12) begrenzt ist. Die Sicherheitsfangmutter (12) weist einen nach außen abstehenden Bund (13) auf und auf der der Tragmutter (2) gegenüberliegenden Seite des Bundes (13) ist eine zweite Anschlagfläche (19) angeordnet, von der die Sicherheitsfangmutter (12) im Falle eines Gewindedurchbruchs der Tragmutter (2) durch eine in Richtung einer Distanzierung der Sicherheitsfangmutter (12) von der Tragmutter (2) wirkende Kraft abstützbar ist.

## Beschreibung

Die Erfindung betrifft eine Stelleinrichtung zur Positionierung einer Last, mit einer Spindel und einer auf einem Außengewinde der Spindel angeordneten Tragmutter, wobei entweder die Tragmutter in einem Getriebegehäuse drehbar gelagert ist und durch Drehung der Tragmutter die Spindel in Richtung ihrer Längsachse verstellbar ist, oder die Spindel in einem Getriebegehäuse drehbar gelagert ist und durch Drehung der Spindel die Tragmutter in Richtung der Längsachse der Spindel verstellbar ist, und mit einer Sicherheitsfangmutter, die ebenfalls auf dem Außengewinde der Spindel angeordnet ist und mit der Tragmutter über eine Kupplung drehmomentübertragend aber in Richtung der Längsachse der Spindel verschiebbar verbunden ist, wobei im Falle eines Gewindedurchbruchs der Tragmutter durch eine in Richtung einer Annäherung der Sicherheitsfangmutter an die Tragmutter wirkende Kraft die Verschiebung der Sicherheitsfangmutter in Richtung zur Tragmutter durch eine erste Anschlagfläche für die Sicherheitsfangmutter begrenzt ist.

Derartige Stelleinrichtungen, die auch als Spindelhubgetriebe bezeichnet werden, dienen der Positionierung von Bauteilen oder Baugruppen. Beispielsweise kommen solche Stelleinrichtungen bei Hubtischen, Hebeböcken, höhenverstellbaren Bühnen, Ventilen mit motorisch verstellbaren Ventilschiebern, motorisch verstellbaren Betonschalungen usw. zum Einsatz.

Neben Spindelhubgetrieben, bei denen die Tragmutter drehbar in einem Getriebegehäuse gelagert ist und bei ihrer Drehung eine unverdrehbare Spindel in achsialer Richtung verstellt, sind auch Spindelhubgetriebe bekannt, bei welchen die Spindel drehbar im Getriebegehäuse gelagert ist und durch Drehung der Spindel eine auf ihrem Außengetriebe angeordnete und gegen Verdrehung gesicherte Mutter in achsialer Richtung der Spindel verstellt wird.

Die Tragmuttern von Stelleinrichtungen der eingangs genannten Art, welche unter Last auf dem Außengewinde der Spindel laufen, sind einem Verschleiß unterworfen, da es nicht möglich ist, eine werkstoffberührungsfreie hydrodynamische Schmierung zwischen der Mutter und der Gewindestange aufzubauen. Da das Gewinde der Tragmutter kürzer als das Gewinde der Spindel ist und die Tragmutter im Allgemeinen aus einem schwächeren Werkstoff als die Spindel besteht, tritt der Verschleiß praktisch nur beim Muttergewinde auf. In vielen Anwendungen, beispielsweise bei Hebebühnen, sind aus Sicherheitsgründen sogenannte Sicherheitsfangmutter vorgesehen, die im Falle eines Durchbruchs des Gewindes der Tragmutter die Spindel in die vorgesehene Lastrichtung auffangen. Hierzu wird die Sicherheitsfangmutter mit der Tragmutter über eine Kupplung drehmomentübertragend gekoppelt und im achsialen Abstand zur Tragmutter achsial lastfrei mitlaufen gelassen. Die Tragmutter und die Sicherheitsfangmutter sind hierbei üblicherweise über eine Klauenkupplung miteinander verbunden.

Wenn es bei einem solchen herkömmlichen Spindelhubgetriebe zu einem Durchbruch des Gewindes der Tragmutter kommt, so wird die zu positionierende Last von der Sicherheitsfangmutter abgefangen, wobei die Sicherheitsfangmutter zur Anlage an die Tragmutter gelangt. Bei der Bauart, bei der die Stelleinrichtung eine achsial verstellbare Spindel aufweist, wird dabei die auf die Spindel ausgeübte Kraft über die Sicherheitsfangmutter und die Tragmutter auf das Getriebegehäuse übertragen. Bei der Bauart, bei der die Stelleinrichtung eine achsial verstellbare Tragmutter aufweist, wird die auf die Tragmutter ausgeübte Kraft über die Sicherheitsfangmutter auf die im Getriebegehäuse gelagerte Spindel übertragen. Beim Durchbruch des Gewindes der Tragmutter kommt es dabei weiters zu einer Betätigung eines Endschalters durch die dabei auftretende Verschiebung der Sicherheitsfangmutter gegenüber der Tragmutter. Durch die Betätigung des Endschalters wird die Anlage abgeschaltet und muss repariert werden.

Nachteilig bei herkömmlichen Stelleinrichtungen der eingangs genannten Art ist es, dass es durch die Sicherheitsfangmutter im Fall eines Gewindedurchbruchs der Tragmutter nur zu einer Lastaufnahme bei einer in Richtung einer Annäherung der Sicherheitsfangmutter an die Tragmutter wirkenden Kraft kommt. Es muss daher die Stelleinrichtung auf die entsprechende Lastrichtung ausgelegt werden bzw. muss für die Stelleinrichtung die richtige Einbaurichtung beachtet werden.

Aufgabe der Erfindung ist es, eine verbesserte Stelleinrichtung mit einer erweiterten Sicherheitsfunktion bereitzustellen. Erfindungsgemäß gelingt dies durch eine Stelleinrichtung mit den Merkmalen des Anspruchs 1.

Da bei einer erfindungsgemäßen Stelleinrichtung die Verschiebung der Sicherheitsfangmutter gegenüber der Tragmutter beidseitig (= in beide achsialen Richtungen) durch Anschläge, die erste und zweite Anschlagflächen aufweisen, begrenzt ist, ist eine erfindungsgemäße Stelleinrichtung für beide auf die Spindel bzw. Tragmutter wirkende Lastrichtungen im Hinblick auf einen Gewindedurchbruch der Tragmutter gesichert. Eine erfindungsgemäße Stelleinrichtung ist daher zum Einsatz für beide Lastrichtungen geeignet. Wenn nur eine Lastrichtung auftritt, so ist die Einbaurichtung der Stelleinrichtung frei wählbar.

In einer vorteilhaften Ausführungsform der Erfindung übergreift ein hülsenartiger Fortsatz der Tragmutter den Bund der Sicherheitsfangmutter. Dieser den Bund der Sicherheitsfangmutter übergreifende hülsenartige Fortsatz der Tragmutter kann hierbei gleichzeitig eine Kupplung zur drehmomentübertragenden aber in Längsrichtung der Spindel verschiebbaren Verbindung zwischen der Tragmutter und der Sicherheitsfangmutter bilden. Zu diesem Zweck kann der Bund mit einer von der Kreisform abweichenden Außenkontur'ausgebildet sein und der hülsenartige Fortsatz eine korrespondierende Innenkontur aufweisen, wobei die Außenkontur des Bundes und die Innenkontur des hülsenartigen Fortsatzes der Tragmutter vorzugsweise eine polygonale Form aufweisen. Beispielsweise eine elliptische Form wäre ebenfalls denkbar und möglich, ist aber weniger bevorzugt.

Im Falle einer Ausbildung der Stelleinrichtung mit einer achsial verstellbaren Spindel ist es bevorzugt, wenn der den Bund der Sicherheitsfangmutter übergreifende hülsenartige Fortsatz der Tragmutter sich stirnseitig an einem Achsiallager abstützt, welches auch die zweite Anschlagfläche aufweist.

Im Falle einer Ausbildung der Stelleinrichtung mit einer achsial verstellbaren Tragmutter ist es bevorzugt, dass am den Bund der Sicherheitsfangmutter übergreifenden hülsenartigen Fortsatz ein plattenförmiges Anschlagteil befestigt ist, welches die zweite Anschlagfläche bildet. Die Tragmutter mit ihrem den Bund der Sicherheitsfangmutter übergreifenden Fortsatz und das Anschlagteil bilden somit eine Art Gehäuse für den Bund der Sicherheitsfangmutter.

Eine erfindungsgemäße Stelleinrichtung kann trotz der Durchbruchsicherung in beide Lastrichtungen sehr kompakt ausgebildet sein.

Weitere Vorteile und Einzelheiten der Erfindung werden im Folgenden anhand der beiliegenden Zeichnung erläutert. In dieser zeigen:
- Fig. 1: einen Längsmittelschnitt durch ein Ausführungsbeispiel einer erfindungsgemäßen Stelleinrichtung;
- Fig. 2: einen Schnitt entlang der Linie A-A von Fig. 1;
- Fig. 3: eine Schrägsicht der Einrichtung von Fig. 1, aber mit nur einem kurzen Abschnitt der Spindel;
- Fig. 4: eine schematische Darstellung der mechatronischen Einheit in einer schematischen Seitenansicht bei entfernter Seitenwand;
- Fig. 5: eine Schrägsicht des Abnehmerglieds, Übertragungsglieds und der Platine der elektronischen Erfassungseinheit;
- Fig. 6: die zusammenwirkenden verstellbaren Glieder der mechanischen Abnehmeranordnung aus einer anderen Blickrichtung (wobei das Abnehmerglied nur zum Teil dargestellt ist);
- Fig. 7: einen Längsmittelschnitt durch ein weiteres Ausführungsbeispiel einer erfindungsgemäßen Stelleinrichtung,
- Fig. 8: einen Schnitt entlang der Linie B-B von Fig. 7 und
- Fig. 9: eine Schrägsicht des die Tragmutter, Sicherheitsfangmutter und Erfassungseinheit aufweisenden Teils der Stelleinrichtung.
Die Fig. weisen unterschiedliche Maßstäbe auf.

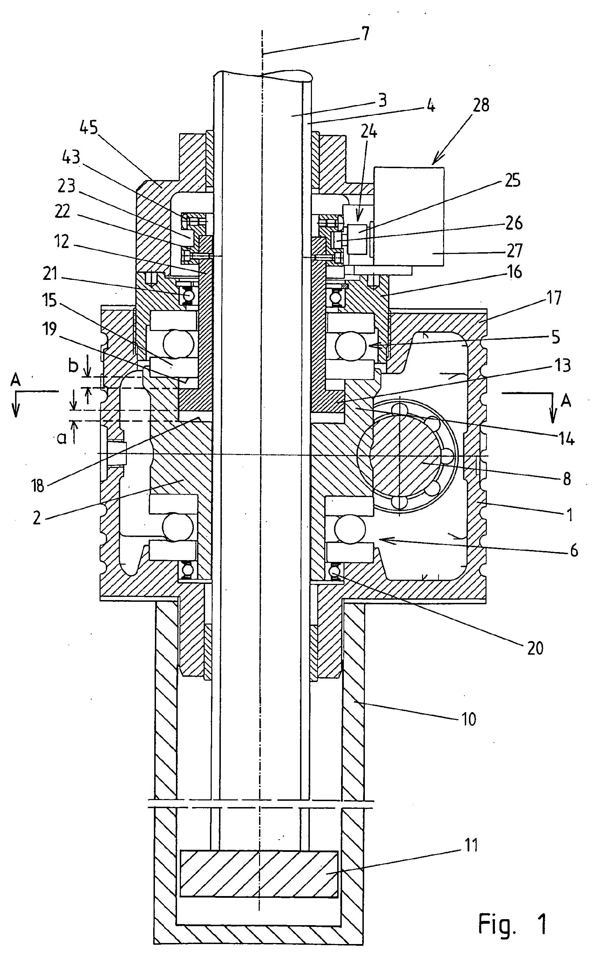

Das in den Fig. 1 bis 6 dargestellte Ausführungsbeispiel einer erfindungsgemäßen Stelleinrichtung umfasst eine Spindel 3 mit einem beispielsweise in Form eines Trapezgewindes ausgebildeten Außengewinde 4, auf dem eine Tragmutter 2 angeordnet ist, die in achsialer Richtung der Spindel 3 unverschiebbar in einem Getriebegehäuse 1 gelagert ist. Zur achsialen Lagerung der Tragmutter 2 dienen diese in achsialer Richtung der Spindel 3 beidseitig abstützende Achsiallager 5, 6. Durch eine Drehung der Tragmutter 2 wird die Spindel 3 in Richtung ihrer Längsachse 7 verstellt, um eine in den Fig. 1 bis 6 nicht dargestellte Last, beispielsweise ein Bauteil oder eine Bauteilgruppe zu positionieren. Zur Drehung der Tragmutter 2 kann diese beispielsweise am Umfang eine Schneckenverzahnung aufweisen, mit der eine Schnecke 8 in Eingriff steht. Die Schnecke 8 ist über eine Antriebswelle 9 von einem in den Fig. nicht dargestellten Antrieb, insbesondere von einem vorzugsweise elektrischen Antriebsmotor antreibbar.

Die Spindel 3 ist gegen eine Verdrehung gesichert. Beispielsweise kann diese Verdrehsicherung durch eine verdrehgesicherte Befestigung der Spindel 3 an der zu positionierenden Last erfolgen. Bevorzugterweise weist aber die Einrichtung selbst eine Verdrehsicherung für die Spindel 3 auf. Diese kann beispielsweise ein mit dem Getriebegehäuse 1 unverdrehbar verbundenes Rohr 10 aufweisen, in welches das von der Positionierseite abgewandte Ende der Spindel 3 ragt. Das Rohr 10 weist einen von der Kreisform abweichenden, beispielsweise quadratischen Querschnitt auf. Am Ende der Spindel ist ein Block 11 mit einer korrespondierenden Kontur angebracht, der somit unverdrehbar gegenüber dem Rohr 10 ist.

Auf der Spindel 3 ist weiters eine Sicherheitsfangmutter 12 angeordnet, deren Innengewinde ebenso wie das der Tragmutter 2 mit dem Außengewinde 4 der Spindel 3 in Eingriff steht. Die hülsenförmig ausgebildete Sicherheitsfangmutter weist einen nach außen abstehenden ringförmig umlaufenden Bund 13 auf, der im gezeigten Ausführungsbeispiel ganz am der Tragmutter 2 zugewandten Ende der Sicherheitsfangmutter 12 liegt. Die Tragmutter 2 besitzt einen in achsialer Richtung der Spindel abstehenden hülsenartigen Fortsatz 14, der den Bund 13 umgibt und sich über diesen hinaus erstreckt. Der Fortsatz 14 stützt sich stirnseitig an einem Anschlagteil 15 des Achsiallagers 5 ab. Das Achsiallager 5 liegt somit zwischen der Stirnseite des Fortsatzes 14 und dem Getriebegehäuse 1. Das Teil des Getriebegehäuses 1, an dem sich im gezeigten Ausführungsbeispiel das Achsiallager 5 abstützt ist ein Getriebegehäusedeckel 16, der mit einem Getriebegehäusegrundteil 17 starr, aber lösbar verbunden ist.

Das andere Achsiallager 6 stützt sich ebenfalls am Getriebegehäuse 1 ab, und zwar im gezeigten Ausführungsbeispiel am Boden des Getriebegehäusegrundteils 17.

Die Tragmutter 2 mit ihrem Fortsatz 4 und das Anschlagteil 15 des Radiallagers 5 bilden eine Art Gehäuse für den Bund 13 der Sicherheitsfangmutter. Die Tragmutter 2 und das Anschlagteil 15 bilden Anschläge für die Sicherheitsfangmutter.

Das Achsiallager 5 umgibt die Sicherheitsfangmutter 12.

Im Normalbetrieb ist die Sicherheitsfangmutter 12 von einer an der Tragmutter 2 angeordneten ersten Anschlagfläche 18 beabstandet (Abstand a in Fig. 1). Weiters ist der Bund 13 der Sicherheitsfangmutter 12 von einer zweiten Anschlagfläche 19, die am Anschlagteil 15 angeordnet ist, im Normalbetrieb beabstandet (Abstand b in Fig. 1). Im verschleißfreien Zustand der Tragmutter 2 sind hierbei die Abstände a, b vorzugsweise auf einen gleich großen Wert eingestellt.

Bei zunehmendem Verschleiß der Tragmutter im Laufe des Betriebs verringert sich je nach Lastrichtung der Abstand a oder Abstand b zunehmend. Wenn es schließlich zum Durchbruch des Gewindes der Tragmutter 2 kommt, falls diese nicht rechtzeitig ausgewechselt worden ist" so verringert sich je nach Lastrichtung einer der beiden Abstände a, b auf den Wert 0, d. h. es kommt zur Anlage der Sicherheitsfangmutter an der ersten oder an der zweiten Anschlagfläche 18, 19. Die auf die Spindel 3 wirkende Last wird dadurch von der Sicherheitsfangmutter 12 über die Tragmutter 2 auf das Getriebegehäuse 1 oder über das Anschlagteil 15 auf das Getriebegehäuse 1 übertragen. Die Stelleinrichtung darf nicht mehr weiter betrieben werden und die Tragmutter 2 muss ausgewechselt werden.

Zur Verbesserung der Lagerung der Tragmutter 2 und der Sicherheitsfangmutter 12 sind diese zusätzlich über Radiallager 20, 21 gegenüber dem Getriebegehäuse 1 gelagert.

Mit der Sicherheitsfangmutter 12 ist ein ringförmiges Geberteil 22 achsial unverschiebbar gegenüber der Sicherheitsfangmutter 12 verbunden (im gezeigten Ausführungsbeispiel durch Schrauben starr verbunden), das an seiner äußeren Mantelfläche eine ringförmig umlaufende Nut 23 aufweist, wobei das Geberteil 22 im gezeigten Ausführungsbeispiel am von der Tragmutter 2 abgewandten Ende der Sicherheitsfangmutter 12 an dieser angebracht ist. Die Verschiebung der Sicherheitsfangmutter 12 gegenüber der Tragmutter 2 bei zunehmendem Verschleiß der Tragmutter 2 wird von einer mechanischen Abnehmeranordnung 55 abgenommen, die mit dem Geberteil 22 zusammenwirkt. In die Nut 23 greift hierzu ein erster Hebelarm 25 eines als Hebel ausgebildeten Abnehmerglieds 24 ein, das um eine Schwenkachse 58 verschwenkbar ist, die senkrecht zur Längsachse 7 der Spindel 3 steht. Vorzugsweise ist hierbei am ersten Hebelarm 25 eine in die Nut 23 eingreifende Rolle 26 drehbar gelagert. Das Abnehmerglied 24 ist im Gehäuse 27 der mechatronischen Einheit 28 verschwenkbar gelagert. Die Einheit 28 ist hierbei an einem am Getriebegehäusedeckel 16 angebrachten Anschlussstück 45 angebracht, welches eine Öffnung im Bereich des Geberrings 22 aufweist.

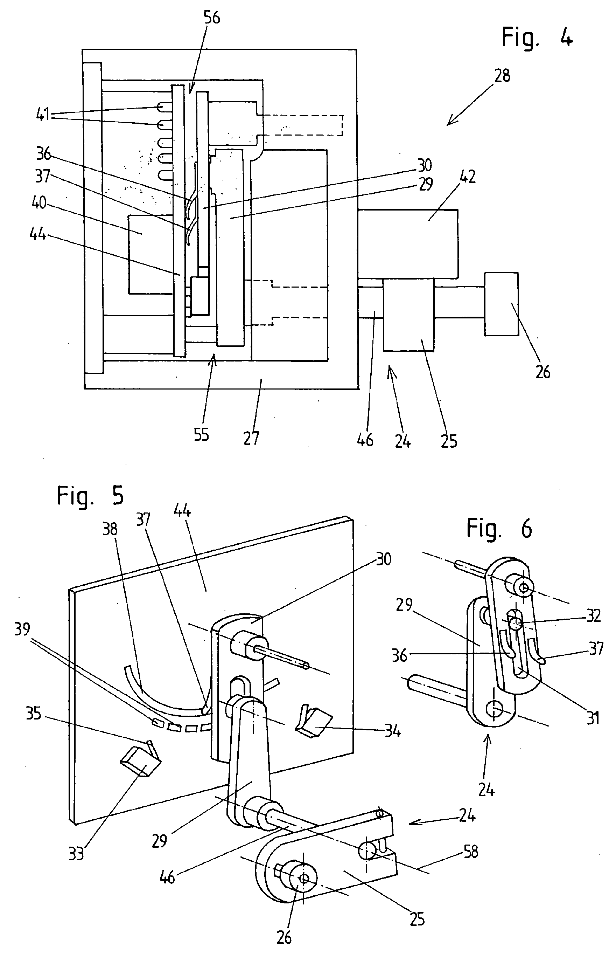

Der innerhalb des Gehäuses 27 liegende zweite Hebelarm 29 greift wiederum an einem als Hebel ausgebildeten Übertragungsglied 30 an (Fig. 4 bis 69. Das Übertragungsglied 30 besitzt ein längs verlaufendes Langloch 31, in welches ein am zweiten Hebelarm 29 angebrachter Stift 32 eingreift. Bei einer Verschwenkung des Abnehmerhebels 24 wird somit der Betätigungshebel 30 ebenfalls verschwenkt. Die den ersten Hebelarm 25 mit dem zweiten Hebelarm 29 des Abnehmergliedes 24 verbindende Welle 46 ist abgedichtet durch die Wand des Gehäuses 27 der Erfassungseinheit 28 durchgeführt.

Die Verstellung der mechanischen Abnehmeranordnung 55 bei einer achsialen Verschiebung der Sicherheitsfangmutter 12 gegenüber der Tragmutter 2 wird von einer elektronischen Erfassungseinheit 56 erfasst und ausgewertet, wie dies weiter unten noch genauer beschrieben wird.

Im Anfangszustand der Tragmutter 2, in welcher ihr Gewinde noch ohne Verschleiß ist, befinden sich das Abnehmerglied 24 und das Übertragungsglied 30 in einer Anfangsstellung. In dieser Anfangsstellung liegt die Rolle 26 vorzugsweise ohne Berührung der Seitenwände der Nut 23 in der Nut 23. Bei zunehmendem Verschleiß des Gewindes der Tragmutter 2 wird durch die dadurch hervorgerufene Verschiebung der Sicherheitsfangmutter 12 gegenüber der Tragmutter 2 und somit gegenüber dem Getriebegehäuse 1 das Abnehmerglied 24 zunehmend verschwenkt, und zwar durch das sich verschiebende Geberteil 22, dessen Nut 23 die Rolle 26 in achsialer Richtung der Spindel 3 verstellt, wobei die Rolle 26 an einer Seitenwand der Nut 23 abrollt. Somit wird auch das Übertragungsglied 30 zunehmend verschwenkt. Im Falle des Gewindedurchbruchs der Sicherheitsfangmutter 12 wird das Übertragungsglied 30 soweit verschwenkt, dass es -je nach der Richtung der auf die Spindel 3 wirkenden Last - einen der beiden Endschalter 33, 34 betätigt, beispielsweise indem sein Ende einen Schalthebel 35 des Endschalters 33 bzw. 34 überfährt und hierbei verschwenkt, wodurch ein potentialfreier Öffnerkontakt betätigt wird. Durch Betätigung eines der beiden Endschalter 33, 34 wird der in den Fig. nicht dargestellte Antrieb der Schnecke 8 abgeschaltet und ein entsprechendes Signal, beispielsweise optisch und/oder akustisch wird ausgelöst.

Zur Erfassung der Verstellung des Übertragungsgliedes 30 bei der Verschiebung der Sicherheitsfangmutter 12 gegenüber der Tragmutter 2 ist die elektronische Erfassungseinheit 56 vorgesehen. Hierzu sind beim gezeigten Ausführungsbeispiel am Übertragungsglied 30 Schleifkontakte 36, 37 angeordnet, die elektrisch miteinander verbunden sind, beispielsweise über den aus einem elektrisch leitfähigen Material bestehenden Betätigungshebel 30. Der Schleifkontakt 36 liegt an einer Schleifbahn 38 einer Platine 44 an, welche von einer durchgehenden Leiterbahn gebildet wird. Der Schleifkontakt 37 verfährt bei einer zunehmenden Verschwenkung des Übertragungsglieds 30 entlang einer Schleifbahn, die von mehreren Leiterbahnabschnitten 39 gebildet wird, die durch isolierende Zwischenbereiche 57 voneinander isoliert sind. Die Schwenkstellung des Betätigungshebels 30 kann dadurch stufenweise über eine Auswertelektronik 40 erfasst werden, die in Fig. 4 nur schematisch angedeutet ist und vorzugsweise von einer Mikroprozessoreinrichtung gebildet wird. Je nach Schwenkstellung des Betätigungshebels 30 werden die Leuchtdioden 41 eines Leuchtdiodenbalkens aktiviert, um den Grad des Verschleißes mehrstufig (z. B. 7-stufig) optisch anzuzeigen. Dies erlaubt es dem Benutzer die restliche Gebrauchszeit bis zum notwendigen Austausch der Tragmutter 2 abzuschätzen und auch rechzeitig einen solchen Austausch durchzuführen, bevor ein Gewindedurchbruch der Tragmutter 2 erfolgt ist. Auch wird mit zunehmendem Verschleiß der Tragmutter 2 die Positionierung der Last ungenauer und durch eine Erfassung des Verschleißgrades kann nicht nur ein rechtzeitiger Austausch der Tragmutter durchgeführt werden, wenn der für den Anwendungsfall maximal zulässige Verschleiß erreicht ist, sondern es kann auch die restliche Betriebszeit abgeschätzt werden, bis ein solcher Austausch erforderlich ist.
Um eine lineare Anzeige des Verschleißes zu erhalten, sind die leitfähigen Abschnitte 39 unterschiedliche breit (sie werden mit zunehmendem Abstand von der unverschwenkten Stellung des Übertragungsglieds 30 kürzer).

Durch die gezeigte Kopplung des Abnehmerglieds 24 mit dem Übertragungsglied 30, welche nach Art einer Malteserkreuz-Übertragung ausgebildet ist, wird eine ausreichende Übersetzung des Verschiebungsweges der Sicherheitsfangmutter 12 erreicht. Auch wird die vom Übertragungsglied 30 ausübbare Kraft mit zunehmender Verschwenkung des Übertragungsglieds 30 vergrößert (bei einer theoretischen Annäherung einer Schwenkstellung von 90° würde die zur Verfügung stehende Kraft unendlich groß sein bei einem Betätigungsweg 0). Die Aufbringung der für die Betätigung der Endschalter 33, 34 zur Verfügung stehende Kraft wird dadurch erleichtert.

Über die mechatronische Einheit 28 kann weiters die Drehung der Spindel 3 detektiert werden. Hierzu ist ein Hallsensor 42 vorhanden, der in den Fig. nur schematisch angedeutet ist. Als Geber für den Hallsensor 42 dienen mehrere im ringförmigen Geberteil 22 angeordnete und in Umfangsrichtung des ringförmigen Geberteils 22 voneinander beabstandete Teile 43 aus einem magnetisierbaren Werkstoff, beispielsweise Schrauben. Das Geberteil 22 besteht dagegen aus einem unmagnetisierbaren Material, beispielsweise Messing. Der Hallsensor 42 erfasst die Vorbeibewegung der Teile 43 als Impulse, die von der Auswertelektronik 40 ausgewertet werden oder an einem Ausgang 54 zur Auswertung durch eine separate Auswertelektronik ausgegeben werden. Es kann dadurch einerseits detektiert werden, ob eine Drehung der Sicherheitsfangmutter 12 und damit der Tragmutter 2 vorliegt und weiters aus der Anzahl der Impulse die Größe der Verstellung der Spindel 3 in achsialer Richtung (= inkrementale Hubmessung).

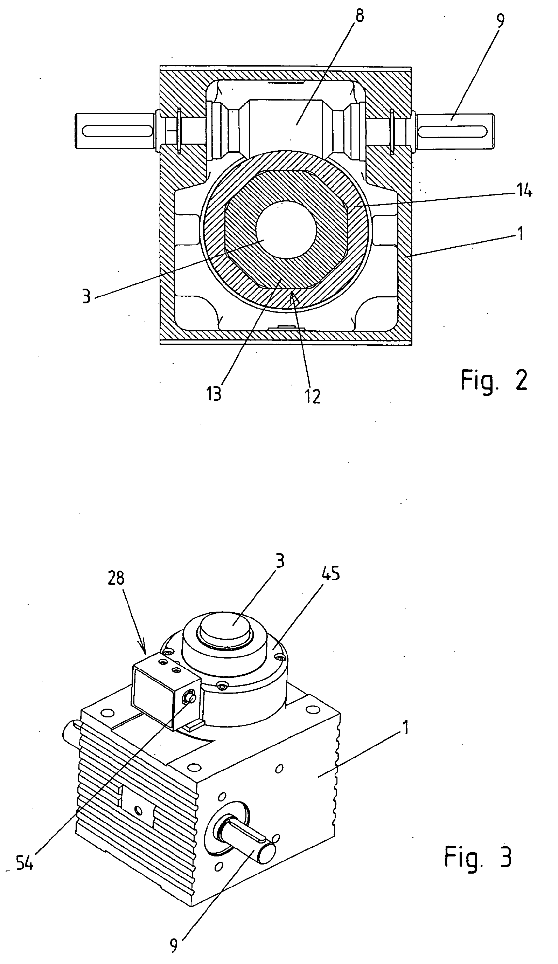

Die mechantronische Einheit 28 dient somit für die Endabschaltung im Falle eines Gewindedurchbruchs der Tragmutter 2, für die Anzeige des Verschleißgrades der Tragmutter 2 und für die Erfassung der Drehung der Spindel 3. Die erfassten Werte werden vorteilhafterweise an einen entsprechenden Ausgang 54 (Fig. 3) der mechatronischen Einheit 28 ausgegeben, an dem sie zu Steuerungs- und Anzeigezwecken abgenommen werden können.

Der erste Hebelarm 25 des Abnehmergliedes 24 ist abnehmbar und austauschbar mit der Welle 46 verbunden. Dadurch kann für unterschiedliche Stelleinrichtungen mit unterschiedlichen Ganghöhen des Außengewindes der Spindel 3 des Innengewindes der Tragmutter 2 die Übersetzung angepasst werden. Die übrigen Teile der mechatronischen Einheit 28 können dadurch unverändert verwendet werden.

Unterschiedliche Modifikationen des in den Fig. 1 bis 6 dargestellten Ausführungsbeispiels sind denkbar und möglich, ohne den Bereich der Erfindung zu verlassen. Beispielsweise könnte anstelle eines Hallsensors 42 ein anderer Sensor zur Erfassung der Drehung der Spindel 3 vorgesehen sein, beispielsweise ein optischer Sensor (wobei optische Sensoren allerdings gegenüber Verschmutzungen sensibler sind). Anstelle eines separaten an Geberteils 22, welches mit der Sicherheitsfangmutter 12 in achsialer Richtung der Sicherheitsfangmutter 12 unverschiebbar verbunden ist, wäre es auch denkbar und möglich, dass das Abnehmerglied 24 direkt mit der Sicherheitsfangmutter 12 zusammenwirkt, beispielsweise indem die Nut 23 direkt an der Sicherheitsfangmutter 12 ausgebildet ist und diese ringförmig umgibt.

Anstelle der Übertragung der Verschiebung des ersten Hebelarms 25 über eine malteserkreuzartige Verbindung des Abnehmerglieds 24 mit einem Übertragungsglied 30 wäre es bei einer ausreichenden Ganghöhe der Spindel und damit verbundenen Größe des Verschiebewegs der Sicherheitsfangmutter prinzipiell auch denkbar und möglich, dass das Übertragungsglied 30 entfällt und der zweite Hebelarm 29 direkt mit den Endschaltern 34 bzw. mit Schleifkontakten zusammenwirkt oder das eine in anderer Form zusammenwirkende Übertragungskette vorgesehen wird.

Weitere Zwischenglieder zwischen dem Abnehmerglied 24 und dem Übertragungsglied 30 könnten ebenfalls vorgesehen sein. Prinzipiell wäre es auch denkbar und möglich, das Abnehmerglied 24 der mechanischen Abnehmeranordnung 55 in einer anderen Weise als in Form eines verschwenkbaren Hebels auszubilden, wobei die Ausbildung als verschwenkbarer Hebel besonders bevorzugt ist.

Obwohl das gezeigte Ausführungsbeispiel eine kompakte Bauweise ermöglicht, wäre es auch denkbar und möglich, den Bund 13 der Sicherheitsfangmutter 12 auf der von der Tragmutter 2 abgewandten Seite des Achsiallagers 5 anzuordnen. Die zweite Anschlagfläche, an die der Bund 13 im Falle eines Gewindedurchbruchs der Tragmutter 2 anschlägt, könnte in diesem Fall an einem anderen gehäusefesten Teil vorgesehen sein. Dieses müsste sich auch nicht unbedingt bei einer Drehung der Tragmutter 2 mit dieser mitdrehen. Prinzipiell denkbar und möglich, obwohl weniger bevorzugt, wäre es auch, dass die erste Anschlagfläche 18 ebenfalls an einem gehäusefesten Teil und nicht an der Tragmutter 2 angeordnet ist, wobei sich dieses gehäusefeste Teil bei einer Drehung der Tragmutter 2 nicht mitdreht. Auch die Kupplung zwischen der Tragmutter 2 und der Sicherheitsfangmutter 12 kann in einer anderen als der gezeigten Weise ausgebildet sein, beispielsweise in Form einer Klauenkupplung.

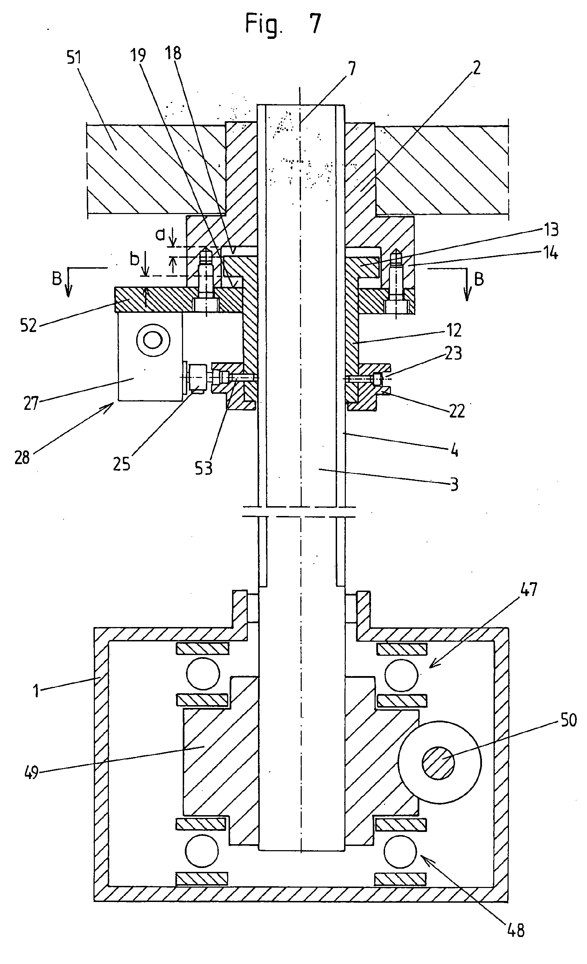

Ein weiteres Ausführungsbeispiel der Erfindung ist in den Fig. 7 bis 9 dargestellt. In dieser Ausführungsform der Erfindung ist die Spindel 3 drehbar im Getriebegehäuse 1 gelagert, wobei Achsiallager 47, 48 die auf die Spindel 3 wirkenden achsialen Kräfte aufnehmen. Hierbei ist beispielsweise die Spindel in ein Schneckenrad 49 eingepresst oder eingeschweißt, welches von den Achsiallagern 47, 48 gelagert ist und von einer Schnecke 50 mittels eines Antriebsmotors antreibbar ist. Diese Teile der Stelleinrichtung sind in Fig. 7 nur schematischer Form dargestellt und können in herkömmlicher Weise ausgebildet sein. Auf dem Außengewinde 4 der Spindel 3, welches beispielsweise wiederum als Trapezgewinde ausgebildet sein kann, ist eine Tragmutter 2 angeordnet, welche eine nur schematisch angedeutete Last 51 trägt. Die Tragmutter 2 ist hierbei unverdrehbar mit der Last 51 verbunden, wodurch die Verdrehsicherung der Tragmutter 2 um die Längsachse 7 erreicht wird.

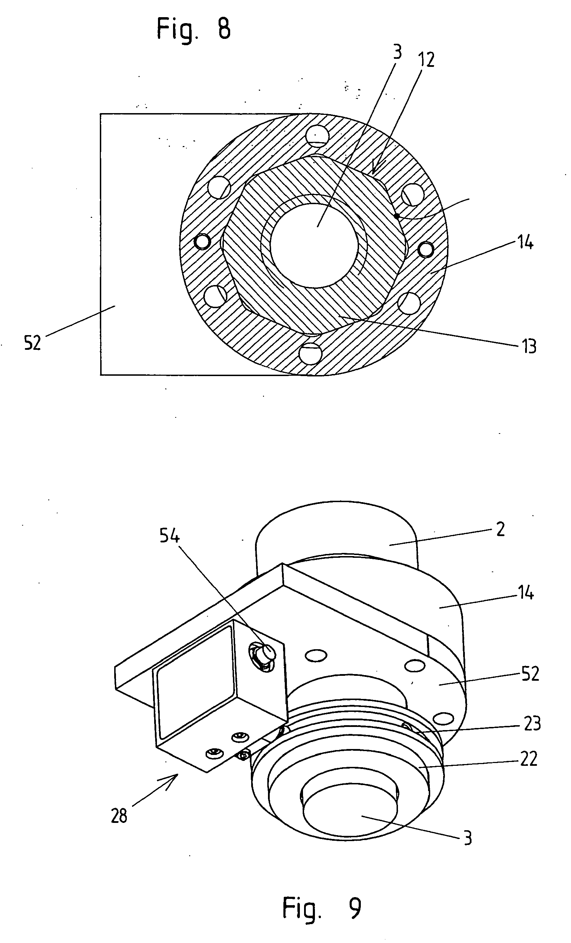

Auf das Außengewinde der Spindel 3 ist weiters eine Sicherheitsfangmutter 12 aufgeschraubt. Diese ist mit ihrem der Tragmutter 2 zugewandten Ende von dieser beabstandet (Abstand a in Fig. 8). Die Sicherheitsfangmutter 12 besitzt einen nach außen abstehenden ringförmigen Bund 13, der im gezeigten Ausführungsbeispiel ebenfalls am der Tragmutter 2 zugewandten achsialen Ende der Sicherheitsfangmutter 12 angeordnet ist. Der Bund 13 wird (wie beim Ausführungsbeispiel gemäß den Fig. 1 bis 6) von einem hülsenartigen Fortsatz 14 der Tragmutter 2 in achsialer Richtung der Spindel 3 radial außerhalb des Bundes 13 überragt. Am von der Tragmutter 2 abgelegenen Ende des Fortsatzes 14 ist ein Anschlagteil 52 starr mit dem Fortsatz 14 verbunden, im gezeigten Ausführungsbeispiel angeschraubt. Das Anschlagteil 52 weist eine Durchtrittsöffnung für die Sicherheitsfangmutter 12 auf, wobei diese Durchtrittsöffnung eine geringere Breite als der Bund 13 besitzt. Das Anschlagteil 52 umgibt somit die Sicherheitsfangmutter 12 über einen Abschnitt ihrer Längsausdehnung. Vorzugsweise liegt nur ein geringes Spiel zwischen der Sicherheitsfangmutter 12 und dem Anschlagteil 52 vor.

Die Tragmutter 2 mit ihrem Fortsatz 14 und das Anschlagteil 52 bilden eine Art Gehäuse für den Bund 13 der Sicherheitsfangmutter 12.

Die erste Anschlagfläche 18, die zum Anschlag der Sicherheitsfangmutter 12 im Falle eines Gewindedurchbruchs der Tragmutter 2 bei einer in Richtung einer Annäherung der Sicherheitsfangmutter 12 an die Tragmutter 2 auf die Tragmutter 2 ausgeübten Kraft dient, ist stirnseitig an der Tragmutter 2 angeordnet.

Falls dagegen die Stelleinrichtung nicht für eine Anwendung eingesetzt wird, bei der auf die Tragmutter 2 eine Druckkraft in Richtung zum Getriebegehäuse 1 vorliegt, sondern eine vom Getriebegehäuse 1 weggerichtete Zugkraft auftritt, so schlägt der Bund 13 der Sicherheitsfangmutter 12 im Falle eines Gewindedurchbruchs der Tragmutter an der zweiten Anschlagfläche 19 an. Diese ist an der der Sicherheitsfangmutter 12 zugewandten Seitenfläche des Anschlagteils 52 angeordnet.

Die Sicherheitsfangmutter 12 ist somit beidseitig in achsialer Richtung mit Spiel gefangen. Im Fall eines Gewindedurchbruchs der Tragmutter 2 wird somit die auf die Tragmutter 2 wirkende Last in beide Lastrichtungen über die Sicherheitsfangmutter 12 auf die Spindel 3 und weiter auf das Getriebegehäuse 1 geleitet

An der Sicherheitsfangmutter 12 ist wiederum ein ringförmiges Geberteil 22 angebracht, das eine ringförmig umlaufende Nut 23 aufweist, in die der erste Hebelarm eines Abnehmerglieds 24 einer mechanischen Abnehmeranordnung 55 einer mechatronischen Einheit 28 eingreift. Die mechatronische Einheit 28 kann hierbei in der anhand der Fig. 4 bis 6 beschriebenen Weise ausgebildet sein. Als Geber für den Hallsensor dienen die Schrauben 53 mit denen das Geberteil 22 an der Sicherheitsfangmutter 12 befestigt ist.

Die Kupplung zwischen der Tragmutter 2 und der Sicherheitsfangmutter 12 kann wiederum durch eine polygonale Innenkontur des Fortsatzes 14 ausgebildet werden, die mit einer korrespondierenden polygonalen Außenkontur des ringförmigen Bundes 13 zusammenwirkt, wie dies aus Fig. 8 ersichtlich ist.

Auch bei dem in den Fig. 7 bis 9 dargestellten Ausführungsbeispiel der Erfindung sind unterschiedliche Modifikationen denkbar und möglich, ohne den Bereich der Erfindung zu verlassen. So könnte beispielsweise die zweite Anschlagfläche 19 direkt an der Tragmutter 2 angeordnet sein und die erste Anschlagfläche 18 an einem an der Tragmutter 2 befestigten Teil. Hierbei könnte beispielsweise auch die Sicherheitsfangmutter 12 auf der vom Getriebegehäuse 1 abgewandten Seite der Tragmutter 2 auf die Spindel 3 aufgeschraubt sein.

Bei allen beschriebenen Ausführungsformen könnte das als verschwenkbarer Hebel ausgebildete Abnehmerglied anstelle mit einer Nut 23 in der Sicherheitsfangmutter 12 oder in einem mit der Sicherheitsfangmutter 12 verbundenen Geberteil 22 auch mit einer radialen Schulter der Sicherheitsfangmutter 12 oder eines mit der Sicherheitsfangmutter 12 verbundenen Geberteils zusammenwirken, wenn das Abnehmerglied von einer Federeinrichtung an diese Schulter angedrückt wird.

Auch die Kupplung zwischen der Tragmutter 2 und der Sicherheitsfangmutter 12 könnte wiederum in einer anderen Weise ausgebildet sein, beispielsweise in Form einer Klauenkupplung.

### Legende zu den Hinweisziffern:

- 1: Getriebegehäuse
- 2: Tragmutter
- 3: Spindel
- 4: Außengewinde
- 5: Achsiallager
- 6: Achsiallager
- 7: Längsachse
- 8: Schnecke
- 9: Antriebswelle
- 10: Rohr
- 11: Block
- 12: Sicherheitsfangmutter
- 13: Bund
- 14: Fortsatz
- 15: Anschlagteil
- 16: Getriebegehäusedeckel
- 17: Getriebegehäusegrundteil
- 18: erste Anschlagfläche
- 19: zweite Anschlagfläche
- 20: Radiallager
- 21: Radiallager
- 22: Geberteil
- 23: Nut
- 24: Abnehmerglied
- 25: erster Hebelarm
- 26: Rolle
- 27: Gehäuse
- 28: mechatronische Einheit
- 29: zweiter Hebelarm
- 30: Übertragungsglied
- 31: Langloch
- 32: Stift
- 33: Endschalter
- 34: Endschalter
- 35: Schalthebel
- 36: Schleifkontakt
- 37: Schleifkontakt
- 38: Schleifbahn
- 39: Leiterbahnabschnitt
- 40: Auswertelektronik
- 41: Leuchtdiode
- 42: Hallsensor
- 43: Teil
- 44: Platine
- 45: Anschlussstück
- 46: Welle
- 47: Achsiallager
- 48: Achsiallager
- 49: Schneckenrad
- 50: Schnecke
- 51: Last
- 52: Anschlagteil
- 53: Schraube
- 54: Ausgang
- 55: mechanische Abnehmeranordnung
- 56: elektronische Erfassungseinheit
- 57: isolierender Zwischenbereich
- 58: Schwenkachse

## Patentansprüche

1. Stelleinrichtung zur Positionierung einer Last, mit einer Spindel (3) und einer auf einem Außengewinde (4) der Spindel (3) angeordneten Tragmutter (2), wobei entweder die Tragmutter (2) in einem Getriebegehäuse (1) drehbar gelagert ist und durch Drehung der Tragmutter (2) die Spindel (3) in Richtung ihrer Längsachse (7) verstellbar ist, oder die Spindel (3) in einem Getriebegehäuse (1) drehbar gelagert ist und durch Drehung der Spindel (3) die Tragmutter (2) in Richtung der Längsachse der Spindel (3) verstellbar ist, und mit einer Sicherheitsfangmutter (12), die ebenfalls auf dem Außengewinde (4) der Spindel (3) angeordnet ist und mit der Tragmutter (2) über eine Kupplung drehmomentübertragend aber in Richtung der Längsachse (7) der Spindel (3) verschiebbar verbunden ist, wobei im Falle eines Gewindedurchbruchs der Tragmutter (2) durch eine in Richtung einer Annäherung der Sicherheitsfangmutter (12) an die Tragmutter (2) wirkende Kraft die Verschiebung der Sicherheitsfangmutter (12) in Richtung zur Tragmutter (2) durch eine erste Anschlagfläche (18) für die Sicherheitsfangmutter (12) begrenzt ist, **dadurch gekennzeichnet, dass** die Sicherheitsfangmutter (12) einen nach außen abstehenden Bund (13) aufweist und auf der der Tragmutter (2) gegenüberliegenden Seite des Bundes (13) eine zweite Anschlagfläche (19) angeordnet ist, von der die Sicherheitsfangmutter (12) im Falle eines Gewindedurchbruchs der Tragmutter (2) durch eine in Richtung einer Distanzierung der Sicherheitsfangmutter (12) von der Tragmutter (2) wirkende Kraft abstützbar ist.

2. Stelleinrichtung nach Anspruch 1, **dadurch gekennzeichnet, dass** der Bund (13) der Sicherheitsfangmutter (12) von einem hülsenartigen Fortsatz (14) der Tragmutter (2) umgeben wird.

3. Stelleinrichtung nach Anspruch 2, **dadurch gekennzeichnet, dass** der Bund (13) gegenüber dem hülsenartigen Fortsatz (14) gegen eine Verdrehung gesichert ist, wobei vorzugsweise der Bund (13) eine von einer Kreisform abweichende Außenkontur aufweist und der hülsenartige Fortsatz (14) eine korrespondierende Innenkontur aufweist.

4. Stelleinrichtung nach Anspruch 3, **dadurch gekennzeichnet, dass** die Außenkontur des Bundes (13) und die Innenkontur des hülsenartigen Fortsatzes (14) polygonförmig ausgebildet sind.

5. Stelleinrichtung nach einem der Ansprüche 1 bis 4, **dadurch gekennzeichnet, dass** im Falle einer Ausbildung der Stelleinrichturig mit einer achsial verstellbaren Spindel die erste Anschlagfläche (18) an der Tragmutter (2) oder an einem anderen in achsialer Richtung der Spindel (3) gegenüber dem Getriebegehäuse (1) unverschiebbaren Teil angeordnet ist.

6. Stelleinrichtung nach einem der Ansprüche 1 bis 5, **dadurch gekennzeichnet, dass** im Falle einer Ausbildung der Stelleinrichtung mit einer achsial verstellbaren Spindel (3) die zweite Anschlagfläche (19) an einem in achsialer Richtung der Spindel (3) gegenüber dem Getriebegehäuse (1) unverschiebbaren, vorzugsweise innerhalb des Getriebegehäuses (1) angeordneten, Anschlagteil (15) angeordnet ist.

7. Stelleinrichtung nach Anspruch 6, **dadurch gekennzeichnet, dass** das Anschlagteil (15) Teil eines Achsiallagers (5) für die Tragmutter (2) ist, welches die Sicherheitsfangmutter (12) umgibt.

8. Stelleinrichtung nach Anspruch 7, **dadurch gekennzeichnet, dass** das die zweite Anschlagfläche (19) aufweisende Achsiallager (5) auf der von der Tragmutter (2) abgewandten Seite von einem mit einem Getriebegehäusegrundteil (17) verbundenen Getriebegehäusedeckel (16) gehalten ist.

9. Stelleinrichtung nach Anspruch 7 oder Anspruch 8, **dadurch gekennzeichnet, dass** sich der hülsenartige Fortsatz an seiner von der Tragmutter (2) abgewandten Stirnseite am die zweite Anschlagfläche (19) aufweisenden Achsiallager (5) abstützt.

10. Stelleinrichtung nach einem der Ansprüche 1 bis 9, **dadurch gekennzeichnet, dass** sich im Falle einer Ausbildung der Stelleinrichtung mit einer achsial verstellbaren Spindel (3) die Tragmutter (2) beidseitig an am Getriebegehäuse (1) abgestützten Achsiallagern (5, 6) abstützt.

11. Stelleinrichtung nach einem der Ansprüche 1 bis 4, **dadurch gekennzeichnet, dass** im Falle einer Ausbildung der Stelleinrichtung mit einer achsial verstellbaren Tragmutter (2) die erste Anschlagfläche (18) an der Tragmutter (2) oder an einem an der Tragmutter (2) befestigten Teil angeordnet ist.

12. Stelleinrichtung nach einem der Ansprüche 1 bis 4 oder nach Anspruch 11, **dadurch gekennzeichnet, dass** im Falle einer Ausbildung der Stelleinrichtung mit einer achsial verstellbaren Tragmutter (2) die zweite Anschlagfläche (19) an der Tragmutter (2) oder an einem an der Tragmutter (2) befestigten Anschlagteil (52) angeordnet ist.

13. Stelleinrichtung nach Anspruch 12, **dadurch gekennzeichnet, dass** das Anschlagteil (52) stirnseitig am den Bund (13) der Sicherheitsfangmutter (12) übergreifenden Fortsatz (14) befestigt ist.

14. Stelleinrichtung nach einem der Ansprüche 1 bis 13, **dadurch gekennzeichnet, dass** die Sicherheitsfangmutter (12) im Normalbetrieb von der ersten und der zweiten Anschlagfläche (18, 19) beabstandet ist.

15. Stelleinrichtung nach einem der Ansprüche 1 bis 14, **dadurch gekennzeichnet, dass** bei einer Anlage der Sicherheitsfangmutter (12) an der ersten Anschlagfläche (18) und bei einer Anlage der Sicherheitsfangmutter (12) an der zweiten Anschlagfläche (19) ein Endschalter (33, 34) betätigt wird.

16. Stelleinrichtung nach Anspruch 15, **dadurch gekennzeichnet, dass** zur Betätigung der Endschalter (33, 34) ein eine Verschiebung der Sicherheitsfangmutter (12) gegenüber der Tragmutter (2) erfassendes als Hebel ausgebildetes Abnehmerglied (24) in eine Nut (23) der Sicherheitsfangmutter (12) oder eines an der Sicherheitsfangmutter (12) angebrachten Geberrings (22) eingreift.

17. Stelleinrichtung nach Anspruch 16, **dadurch gekennzeichnet, dass** das Abnehmerglied (24) einen ersten Hebelarm (25), der in die Nut (23) eingreift, und einen zweiten Hebelarm (29) aufweist, die über eine Welle (46) miteinander verbunden sind, welche durch ein Gehäuse (27) einer mechatronischen Einheit (28) geführt ist, wobei die Welle (46) vorzugsweise gegenüber dem Gehäuse (27) abgedichtet ist.

18. Stelleinrichtung nach Anspruch 17, **dadurch gekennzeichnet, dass** der zweite Hebelarm (29) an einem als Hebel ausgebildeten Übertragungsglied (30) angreift und bei seiner Verschwenkung das Übertragungsglied (30) verschwenkt, wobei das Übertragungsglied (30) die Endschalter (33, 34) betätigt.

19. Stelleinrichtung nach Anspruch 18, **dadurch gekennzeichnet, dass** der zweite Hebelarm (29) des Abnehmergliedes (24) mit dem als Hebel ausgebildeten Übertragungsglied (30) nach Art einer Malteserkreuz-Verstellung verbunden ist.

20. Stelleinrichtung nach einem der Ansprüche 16 bis 19, **dadurch gekennzeichnet, dass** eine Verschleißanzeige vorhanden ist, wobei der Schwenkwinkel des Abnehmerglieds (24) oder des mit dem Abnehmerglied (24) verbundenen Übertragungsglieds (30) von einer elektronischen Erfassungseinheit (56) erfasst wird.
